# EUROPEAN PATENT APPLICATION

(11) **EP 4 279 324 A1**
(43) Date of publication of application: **22.11.2023**
(21) Application number: 22174647.2
(22) Date of filing: 20.05.2022
(51) Int. Cl.: B60L 53/14, B60L 3/04, B60L 53/62, B60L 53/66

(54) **CHARGING STATION FOR ELECTRIC VEHICLES**

(71) Applicant: AMINA IPR AS, 4313 Sandnes (NO)
(72) Inventor: Wetteland, Øyvind, 3152 Tolvsrød (NO)
(74) Representative: Plougmann Vingtoft a/s

(57) **Abstract**

The invention relates to a charging station for supplying AC current to an electrical vehicle. The station comprises a charging socket for connecting with a charging plug of a charging cable, an input terminal for receiving AC current from an electric AC power source, a monitoring circuit for monitoring at least one charging related signal, wherein the at least one charging related signal relates to a condition for maintaining or generating a cut-off between the electric power source and the charging socket to de-energize the charging socket, a first communication circuit arranged to communicate a control signal out of the charging station to a second communication unit of a receiver system, wherein the control signal is based on the monitored charging related signal.

## Description

### FIELD OF THE INVENTION

The invention relates to charging of electric batteries of vehicles, particularly to charging stations for home charging such as AC charging stations.

### BACKGROUND OF THE INVENTION

Charging stations for charging electric vehicles must satisfy a number of electric requirements to ensure a high level of safety with regard to personal injuries and to prevent damages of the vehicle's charging system and other electrical installations.

Therefore, the charging stations are configured with electrical components in order to meet the requirements. While the electrical components may be required, the cost of a charging station increases. Therefore, there is a need for charging stations that has a lower cost, but still meets the electrical requirements.

### SUMMARY OF THE INVENTION

It is an object of the invention to provide an improved charging stations for charging electric vehicles, particularly a charging station that can be produced at lower cost, but it is also an object of the invention to provides other improvements of charging stations such as improved user functionalities.

In a first aspect of the invention, a charging station for supplying AC current to an electrical vehicle is provided, the charging station comprises:
- a charging socket for connecting with a charging plug of a charging cable,
- an input terminal for receiving AC current from an electric AC power source,
- a monitoring circuit for monitoring at least one charging related signal, wherein the at least one charging related signal relates to a condition for maintaining or generating a cut-off between the electric power source and the charging socket to de-energize the charging socket,
- a first communication circuit arranged to communicate a control signal out of the charging station to a second communication unit of a receiver system according to a second aspect, wherein the control signal is based on the monitored charging related signal.

Advantageously, by communicating information comprised in the control signal to a second communication unit, certain functions of the charging station may be moved to be performed by other systems than the charging stations. For example, the power cut-off functionality, i.e. the functionality to break the electric power, may be performed by circuit breaker which is not comprised by the charging station. Therefore, the charging station does not need to include the circuit breaker and may therefore be manufactured at a lower cost.

For example, an occurrence of a condition such as a predetermined condition for maintaining or generating the power cut-off between the electric power source and the charging socket requires the maintaining or generating of the cut-off. The requirement to maintaining or generating of the cut-off may be required according to regulation standards.

According to an embodiment, the first communication circuit is arranged to communicate the control signal continuously or periodically at a predetermined frequency, to the receiver system. Advantageously, the communication connection between the first communication circuit and the receiver system, such as a second communication circuit of the receiver system, may be a permanent communication connection such as a wired connection, allowing the control signal to be communicated continuously or periodically to ensure that critical information is reliably communicated from the charging station to the receiver system.

According to an embodiment, the charging station further comprises an analyzing unit arranged for determining if the condition for maintaining or generating the cut-off between the electric power source and the charging socket is satisfied, wherein the determination is based on the monitored charging related signal.

For example, the analyzing unit may be arranged to generate a charging condition signal based on the charging related signal, wherein the charging condition signal indicates if the condition for maintaining or generating the cut-off between the electric power source and the charging socket is satisfied.

The control signal may be determined based on the charging condition signal, e.g. by the analyzing unit.

According to an embodiment the communication unit is arranged to communicate the control signal over a distance of at least 1 m. Advantageously, by enabling a long communication distance of at least 1 m, the certain function of the charging station may be moved to a system located elsewhere, e.g. located near existing systems such as a main distribution box having a fixed location in a building.

According to an embodiment, the charging station comprises an uninterruptible permanent connection for the AC power between the output socket and the input terminal. Advantageously, the charging station may be designed with a simple uninterruptible permanent connection, e.g. without circuit breakers between the output socket and the input terminal to enable a low production cost.

According to an embodiment, the at least one charging related signal enables determination of one or more conditions of: a DC residual current condition, a non-established connection between the output charging socket and an input charging socket of the electrical vehicle, and a communication fault of the first or the second communication unit.

Advantageously, as any of these conditions may require a power cut-off, the control signal for invoking the power cut-off can be generated based on different conditions so that a single controllable circuit breaker can used for such different conditions.

According to an embodiment, the charging station further comprises an analogue power supply arranged to power the first communication circuit.

Advantageously, since the charging station does not include a circuit breaker, a high-power power supply such as a switch-mode power supply may be dispensed with and instead a low-power power supply, which is cheaper and does not have a problem with switching noise, may be sufficient for powering the electronic circuits of the charging station.

A second aspect of the invention relates to a receiver system, comprising:
- a second communication unit arranged to receive the control signal from the charging station of the first aspect.

According to an embodiment, the receiver system comprises a controllable switch, such as a circuit breaker, arranged to generate the cut-off of the AC current from the electric AC power source dependent on the control signal.

Advantageously, the receiver system comprises the controllable switch so that charging station does not require any switch for generating the power cut-off.

According to an embodiment, the controllable switch is further arranged to generate the cut-off of the AC current in response to an AC leakage ground current independent of the control signal.

AC leakage ground current protection circuit breakers are required in electrical installations such as in main distribution boxes. Advantageously, the controllable switch which may be a controllable AC leakage ground current protection switch may be used to switch off power dependent on the control signal from the charging station so that the controllable switch serves required power switch off functions both of the main electrical installation and the charging station.

According to an embodiment, the receiver system comprises an analyzing unit arranged for determining if the condition for maintaining or generating the cut-off between the electric power source and the charging socket is satisfied, wherein the determination is based on the control signal.

According to an embodiment, the receiver system is configured so that the controllable switch can generate the cut-off of the AC current dependent on the determination of the analyzing unit.

According to an embodiment, the receiver system comprises:
- a communication fault detection unit arranged to detect a communication fault of the communication between the first and second communication units, wherein the receiver system is configured so that the controllable switch can generate the cut-off of the AC current dependent on the determination of the communication fault detection unit.

For safety reasons it may be necessary to ensure that the charging process is stopped by generating the power cut-off if the charging station is unable to communicate with the receiver system.

According to an embodiment, the second communication unit is further arranged to transmit a reply signal to the first communication unit. For example, the reply signal may be generated in response to receiving the control signal or a verification signal from the charging station, so that in absence of receiving the reply signal the charging station can invoke certain predetermined safety measures.

A third aspect of the invention relates to a charging system for supplying AC current to an electrical vehicle, comprising
- the charging station of the first aspect, and
- the receiver system of the second aspect.

A fourth aspect of the invention relates to a method for supplying AC current to an electrical vehicle using a charging station according to the first aspect, the method comprises:
- connecting a charging socket with a charging plug of the charging cable,
- monitoring at least one charging related signal, wherein the at least one charging related signal relates to a condition for maintaining or generating a cut-off between the electric power source and the charging socket to de-energize the charging socket,
- communicating a control signal out of the charging station to a second communication unit of a receiver system, wherein the control signal is based on the monitored charging related signal.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1A and 1B show examples of charging systems for illustrating certain standardizing requirements of charging systems, and
Fig. 2A and 2B show examples of charging systems according to embodiments of the present invention.

### DETAILED DESCRIPTION

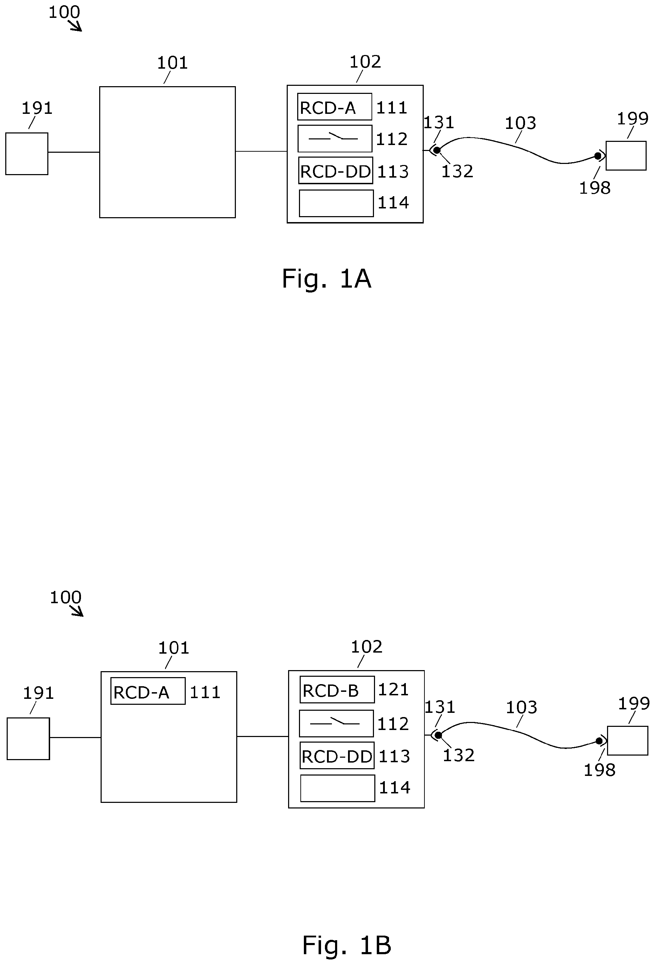

Fig. 1A illustrates a charging system 100 for charging a battery of an electrical vehicle 199 by supplying AC current to the vehicle 199. The following description of the system of Fig. 1 is provided for explaining functions of the charging system which are required in order to meet various international standards for such charging systems, e.g. standards specifying certain functions required to meet electric safety requirements.

The system 100 comprises a main distribution box 101, a charging station 102 and a charging cable 103 for connecting the charging station 102 with the charging plug 198 of the vehicle 199. The charging station 102 comprises an output charging socket 131 for connecting with a charging plug 132 of the charging cable 103.

In this example, the charging station 102 comprises an RCD-A circuit breaker 111 and a controllable switch 112.

Herein any reference to a switch is to be understood as a circuit-breaker switch, i.e. a switch arranged to break the circuit to generate a cut-off of electric current and power. The switch may be embodied by a relay or other switch arranged to generate a cut-off of the power supply, i.e. arranged to switch off the power supply by opening the circuit. A circuit herein refers to an electrical circuit such as a power transfer circuit arranged to transport electric power from the electric power source to the charging station 202. The power transfer circuit may be comprised by the main distribution box 101 or may refer to the power connection between the electric AC power source and the charging station 102.

Electric power is provided to the main distribution box 101 from an electric AC power source 191. The AC power source 191 may be the local utility grid, a local battery source and inverter or any other source of AC electric power.

The RCD-A circuit breaker 111 is a commercially available residual current device arranged to generate a circuit break in response to residual AC currents and residual pulsating AC currents. A residual current is a leakage current flowing to ground e.g. due to faults in the electrical system.

In order to comply with safety regulations such as specified in the international standards IEC 61851 and IEC 62955, either an RCD-A circuit breaker 111 or an RCD-B circuit breaker is required. The RCD-A circuit breaker would in this case be configured to ensure the disconnection of the power supply in case of DC fault current above 6 mA, while the RCD-B circuit already includes this functionality. The RCD-A circuit breaker 111 or RCD-B may be installed in the main distribution box 101, the charging station 102 or otherwise arranged to cut-off the power supply from the AC power source 191 to the charging station 102 or the output charging socket 131.

In case of the RCD-A variant, in addition to the functionality of the RCD-A circuit breaker 111, the system 100 should include a circuit breaker functionality, such as a switch or relay having a high-current capacity, to cut-off the power supply to the charging station 102 or its output charging socket 131 in case of a residual DC current, i.e. a DC leakage current to the ground.

Residual DC currents may occur due to an insulation fault of a galvanic insulation of the DC charger of the vehicle 199.

The RCD-B variant already includes the residual DC fault current protection in addition to AC fault current protection.

In this example, the charging station 102 includes a controllable switch 112 that can be controlled to generate a circuit break in response to a control input.

The charging station 102 further comprises a detection unit 113 arranged for detecting possible residual DC currents and to generate a control signal to the controllable circuit switch 112 so that electric power to the output charging socket 131 is cut-off. For the detection unit 113 a detector known as an RDC-DD may be used, but the detection unit 113 could be configured according to different detection principles.

Fig. 1B shows an alternative example of the charging system 100 wherein the circuit breaker functionality to break the circuit in case of a residual DC current is provided by an RCD-B circuit breaker 121. The RCD-B circuit breaker 121 is also a commercially available residual current device which is arranged to generate a circuit break in response to residual DC currents in addition to the residual currents handled by the RCD-A circuit breaker 111. Accordingly, with the RCD-B circuit breaker 121, the RCD-A circuit breaker 111 may be dispensed with, although it is also possible to use both of the RCD-A and RCD-B circuit breakers 111. For example, an existing RCD-A circuit breaker in the main distribution box 121 may be supplemented by an RCD-B circuit breaker in the charging station 102.

According to international standards, the charging station 102 must be configured so that the output charging socket 131 is not energized, i.e. so that the output charging socket 131 remains disconnected from the AC power source 191, until certain charging conditions are satisfied, or is de-energized, i.e. so output charging socket 131 is disconnected from the AC power source 191, when such charging conditions or other charging conditions occurs.

Examples of such charging conditions are defined in international standards such as IEC61851 comprise:
- Electrical continuity of the protective earthing conductor between the charging station and the vehicle 199. Accordingly, if the protective earthing conductor between the charging station 102 and the vehicle 199 is faulty, the disconnection between the electric power source and the charging socket is maintained or is generated to ensure that the out charging socket 131 is de-energized;
- Proper connection by the charging cable 103 between the charging station 102 and the vehicle 199. If the connection between has a fault, the output charging socket 131 remains or will be de-energized.

The charging station 102 in Fig. 1A and 1B comprises a monitoring unit 114 for monitoring and determining if the above mentioned charging conditions and/or other charging conditions are met. The monitoring unit 114 is referred to as a control pilot circuit in international standards such as IEC61851. IEC61851, Annex A also include design examples for the control pilot circuit as an aid for implementing monitoring functions of the charging conditions.

A further charging condition is that the monitoring function 114 operates correctly and is properly connected to the vehicle 199. Accordingly, the monitoring function 114 is configured to ensure that the output charging socket 131 remains or will be de-energized if the monitoring function 114 is faulty.

The monitoring function 114 may be arranged to control the switch 112 or other switch to ensure that the output socket 131 is de-energized based on the occurrence or removal of a charging condition.

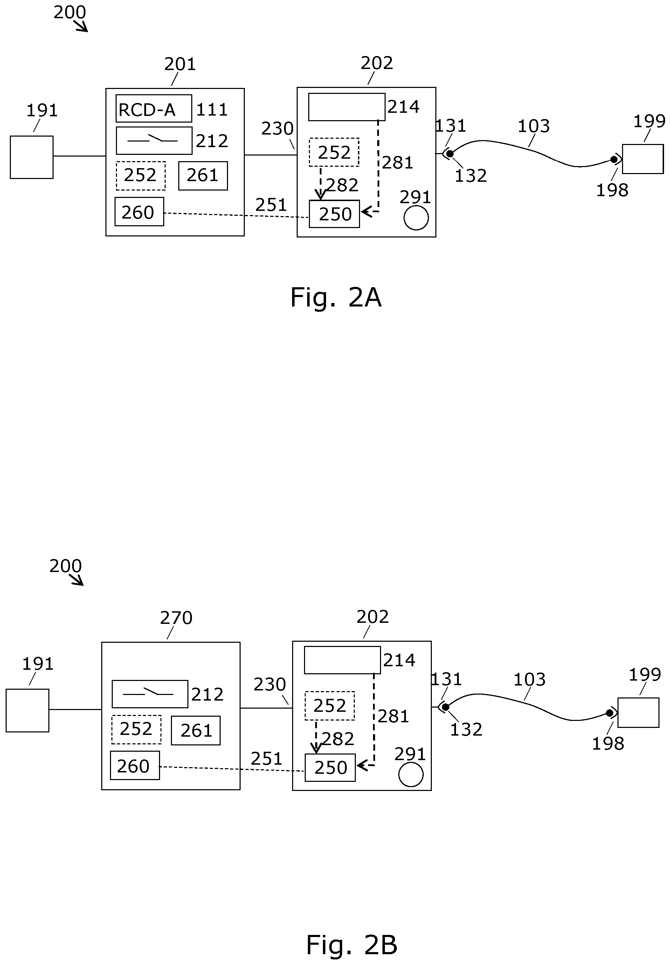

Fig. 2A shows an example of a charging system 200 according to the invention. The charging system is for charging a battery of an electrical vehicle 199 similarly to the charging system 100 and is configured so that it meets safety requirements as specified in international standards as described in connection with Fig. 1A and 1B.

Similar to the examples in Fig. 1A and 1B, the system 200 comprises a main distribution box 201, a charging station 202 and a charging cable 103. The main distribution box 201 have the same function as the corresponding main distribution box 101, but may be configured differently.

The main distribution box 201 is arranged separately from the charging station and is a part of an electric supply system which receives power from the AC power source 191 and possibly divides the electrical power into different circuits and comprises a protective fuses or circuit breaker to protect against electrical overload.

In the following examples, like reference numerals refer to like parts as described in connection with Fig. 1A and 1B. Thus, only the differences will be described here.

The main distribution box 201 comprises an RCD-A circuit breaker 111 and a controllable switch 212.

The charging station comprises a monitoring circuit 214 for monitoring at least one charging related signal. The charging related signal is related to a charging condition, such as one or more of the charging conditions described in connection with Fig. 1A and 1B, for maintaining or generating a cut-off between the electric power source 191 and the charging socket 131.

The monitoring circuit 214 may comprise some of the functions of the monitoring unit 114 for the purpose of monitoring the charging related signal. Accordingly, these functions of the monitoring circuit 214 may be configured according to the control pilot function of the control pilot circuit as described in international standards such as IEC61851 as referred to above. Besides these functions which may be equivalent with those of the monitoring unit 114, the monitoring circuit 214 comprises additional functions as described herein.

Accordingly, the charging related signal could be a voltage signal which is indicative of the presence of the protective earthing conductor between the charging station 202 and the vehicle 199, a signal indicative of whether the charging cable 103 is properly connected to the output socket 131 of the charging station 202 and the input socket 198 of the vehicle 199, a signal indicative of the operation status of the monitoring circuit 214 such as error states of the monitoring circuit, or other charging related signals.

The monitoring circuit 214 may further be configured to detect residual DC currents. Alternatively, a separate monitoring circuit comprised by the charging station may be arranged to detect residual DC currents. Accordingly, the charging related signal can also be a signal which is related to residual DC currents, i.e. the charging related signal can be a signal generated by a differential current transformer arranged to detect current differences, or other signal containing information relating to the presence and/or magnitude of a residual DC current.

The charging station 202 further comprises a first communication circuit 250 arranged to communicate with a second communication circuit 260 by sending a control signal 251 to the second communication circuit 260. The second communication circuit 260 is located outside the charging station 202 and may be comprised by the main distribution box 201 or otherwise arranged in communication with the main distribution box 201. Alternatively, the second communication circuit 260 may be comprised by a receiver system 270.

An input terminal 230 of the charging station 202 is provided for receiving AC current from the electric AC power source 191.

Fig. 2B shows an example where the receiver system 270 is arranged to receive the communication from the charging station. The receiver system 270 may comprise the same units as the main distribution box 201, except the electric installation specific components such as the RCD-A circuit breaker 111. For example, the receiver system 270 may be arranged in series with a standard main distribution box.

Accordingly, the main distribution box 201 may comprise the receiver system 270 and additional electrical components such as the RCD-A circuit breaker 111.

The communication between the first and second communication circuits 250, 260 may be wireless, wired or based on optical communication. Thus, the first communication unit may comprise a transmitter such as RF transmitter, a WiFi communication unit or communication units for wired electrical communication such as a PLC communication unit, or optical communication. The second communication unit may comprise corresponding receiver units. In general, wherein the first communication unit 250 is arranged to communicate the control signal 251 over a certain distance of at least 1 m, such as at least 5m, at least 10m possibly at least 20m.

The control signal 251 may be determined in different ways.

In a first example, the control signal 251 comprises the at least one monitored charging related signal 281, i.e. so that the control signal 251 and the charging related signal 281 includes the same or similar information relating to the one or more charging conditions. Thus, the control signal 251 may be determined from the charging related signal 281 so that the control signal 251 comprises information from the charging related signal 281.

Fig. 2A and 2B shows that the monitoring circuit 214 provides the monitored charging related signal 281 as an input signal to the first communication circuit 250 which determines the control signal 251 based on the monitored charging related signal 281. The determination of the control signal 251 may involve conversion of the monitored charging related signal 281 into a digital format, such as conversion of an analogue voltage into a digital format.

In a second example, the control signal 251 comprises a charging condition signal 282, i.e. the control signal comprises information corresponding to or determined from the charging condition signal 282. The charging condition signal 282 is determined based on the monitored charging related signal 281.

According to the second example, the charging station 202 comprises an analyzing unit 252 arranged to determine the charging condition signal 282 from the charging related signal 281 so that the charging condition signal 282 directly indicates if the condition for maintaining or generating the cut-off between the electric power source and the charging socket is satisfied. For example, the charging related signal 281 being an analogue voltage signal is processed by the analyzing unit 252 into a binary number showing if the charging condition is met or not.

The analyzing unit 252 may include a data processor arranged to process the charging related signal 281 and to generate the charging condition signal 282. For example, the analyzing unit 252 may be configured to filter the charging related signal 281 and to compare the charging related signal 281, or a filtered signal, with a threshold value to determine if a given charging condition is met.

The controllable switch 212 is configured to be controlled based on the control signal 251 received by the second communication unit 260.

According to the second example, wherein the control signal 251 comprises the charging condition signal 282, the controllable switch 212 may be controlled directly based on the received control signal 251.

According to the first example, wherein the control signal 251 comprises the at least one monitored charging related signal 281 or information derived therefrom, such as a digital format of the charging related signal 281, the main distribution box 201 may comprise the analyzing unit 252 arranged to determine the charging condition signal 282 from the charging related signal 281. Thus, in this example the controllable switch 212 may be controlled based on the charging condition signal 282.

Although the analyzing unit 252 may be used and included in the main distribution box 201 or the charging station 202, it is also possible that the analyzing unit 252 is not required, neither in the main distribution box 201 nor in the charging station 202. Thus, it is also possible that the controllable switch 212 may be controlled directly based on the charging related signal 281.

In case the signal processing capability, e.g. as enabled by use of the analyzing unit 252, is not comprised by the charging station 202, but possibly by the main distribution box 201, it may be necessary to send the charging related signal 281, i.e. charging related signal 281 embedded in the control signal 251, continuously sequentially or periodically at a sufficiently high rate. This is in order to ensure that a required de-energization of the output charging socket 131 is not delayed. Accordingly, the first communication circuit 250 may is arranged to communicate the control signal 251 continuously, sequentially or periodically at a predetermined frequency or rate.

Evidently, by locating the controllable switch 212 outside the charging station 202 the design of the charging station 202 is simplified. At the same time, the externally located controllable switch 212 ensures that the AC power supply to the output charging socket 131 can be cut-off in case the monitoring circuit 214 detects a residual DC current or any charging condition that requires a cut-off or maintenance of a cut-off.

The controllable switch 212 may include the functionality of an RCD-A or a RCD-B circuit breaker. For example, by configuring an RCD-A circuit breaker with a controllable switch or as a controllable switch, no other switching elements than the RCD-A circuit breaker is required in a main distribution box 201. Accordingly, the controllable switch 212 may be arranged to generate the cut-off of the AC current in response to an AC leakage ground current independent of the control signal 251. Additionally, the controllable switch 212 may be arranged to generate the cut-off of the AC current in response to a DC leakage ground current independent of the control signal 251.

The simplified design of the charging station 202 implies that the electric connection between the input terminal 230 and the output charging socket 131 are connected by an uninterruptible permanent electric connection for the AC power. Thus, the charging station 202 does not include any circuit breaker or switch in the electrical connection between the input terminal 230 and the output charging socket 131.

Since the charging station 202 does not comprise switches for breaking the power supply, the low voltage power supply for powering the switch and other power consumers such as the monitoring circuit 214 and optionally the analyzing circuit 252 can be dimensioned to a lower power requirement. Typically, switch-mode power supplies are used in charging stations in order to provide a low-cost, high power DC supply. However such switch-mode power supplies may be disadvantageous in view of the electrical noise generated by them. Accordingly, due to the lower power requirement of DC power consumers of the charging station 202, the charging station 202 may be configured with an analogue power supply 291 arranged to power the first communication circuit 250 and optionally the analyzing unit 252.

The analogue power supply may have a relatively low maximum power capacity of in the range from 0.05W to 2W, such range with a lower value of 0.05W, 0.1W, or 0.5W and with an upper value of 1W, 1.5W or 2W. The analogue power supply may be configured based on an analogue transformer, such as a 50Hz/60Hz transformer having primary and secondary windings.

It is essential that the communication between the first and second communication units 250, 260 stays operative to ensure that any change of the control signal 251 is received by the second communication unit 260 so that a required power cut-off can be invoked immediately.

Therefore, the main distribution box 201, alternatively the receiver system 270 may comprise a communication fault detection unit 261 arranged to detect a communication fault of the communication between the first and second communication units. In response to the detection of a communication fault, the communication fault detection unit 261 may instruct the controllable switch 212 to generate the cut-off of the AC current.

For example, first communication unit 250 may be configured to transmit a verification signal periodically, e.g. every second, to the second communication unit 260. The verification signal has the function of a so-called heart beat signal. The communication fault detection unit 261, which may be a function embodied by the second communication unit 260, may generate a communication fault signal which forces the controllable switch 212 to switch off the supply, i.e. by opening the circuit. The communication fault detection unit 261 may comprise a timer configured to generate the fault signal in case no verification signal has been received within a given period set by the timer. Thus, the fault signal can be used to cause a switch off of the power supply.

The second communication unit 260 may further be arranged to transmit a reply signal to the first communication unit 250 in response to receiving a control signal 251 or the verification signal from the first communication unit 250. The charging station 202 may similarly comprise a fault detection unit (not shown) arranged to generate a fault signal in case no reply signal has been received within a given period set by a timer. Thus, in case of a communication fault the power supply will be switched off and the charging station will generate a fault signal that can be used e.g. for generating a fault status signal.

Additionally or alternatively, in case no reply signal has been received by the first communication unit 250 within a given period, the charging station 202 or the monitoring circuit 214 may be configured to communicate a signal to the vehicle 199 to terminate the charging process.

## Claims

1. A charging station (202) for supplying AC current to an electrical vehicle (199) comprising:
- a charging socket (131) for connecting with a charging plug (132) of a charging cable (103),
- an input terminal (230) for receiving AC current from an electric AC power source (191),
- a monitoring circuit (214) for monitoring at least one charging related signal (281), wherein the at least one charging related signal relates to a condition for maintaining or generating a cut-off between the electric power source and the charging socket to de-energize the charging socket,
- a first communication circuit (250) arranged to communicate a control signal (251) out of the charging station to a second communication unit (260) of a receiver system (270) according to claim 8, wherein the control signal is based on the monitored charging related signal.

2. The charging station according to any of the preceding claims, further comprising an analyzing unit (252) arranged for determining if the condition for maintaining or generating the cut-off between the electric power source and the charging socket is satisfied, wherein the determination is based on the monitored charging related signal.

3. The charging station according to claim 2, wherein the analyzing unit is arranged to generate a charging condition signal (282) based on the charging related signal (281), wherein the charging condition signal indicates if the condition for maintaining or generating the cut-off between the electric power source and the charging socket is satisfied.

4. The charging station according to any of the preceding claims, wherein the communication unit is arranged to communicate the control signal over a distance of at least 1 m.

5. The charging station according to any of the preceding claims, wherein the charging station comprises an uninterruptible permanent connection for the AC power between the output socket and the input terminal.

6. The charging station according to any of the preceding claims, wherein the at least one charging related signal enables determination of one or more of: a DC residual current condition, a non-established connection between the output charging socket (131) and an input charging socket (198) of the electrical vehicle (199), and a communication fault of the first or the second communication unit (250, 260).

7. The charging station according to any of the preceding claims, further comprising an analogue power supply (291) arranged to power the first communication circuit.

8. A receiver system (270), comprising:
- a second communication unit (260) arranged to receive the control signal (251) from the charging station of claim 1.

9. The receiver system according to claim 8, further comprising a controllable switch (212) arranged to generate the cut-off of the AC current from the electric AC power source dependent on the control signal (251).

10. The receiver system according to claim 9, wherein the controllable switch is further arranged to generate the cut-off of the AC current in response to an AC leakage ground current independent of the control signal.

11. The receiver system according to any of claims 8-10, further comprising an analyzing unit (252) arranged for determining if the condition for maintaining or generating the cut-off between the electric power source and the charging socket is satisfied, wherein the determination is based on the control signal.

12. The receiver system according to any of claims 8-11, further comprising:
- a communication fault detection unit (261) arranged to detect a communication fault of the communication between the first and second communication units, wherein the receiver system is configured so that the controllable switch can generate the cut-off of the AC current dependent on the determination of the communication fault detection unit.

13. The receiver system according to any of claims 8-12, wherein the second communication unit (260) is further arranged to transmit a reply signal to the first communication unit.

14. A charging system (200) for supplying AC current to an electrical vehicle (199) comprising
- the charging station of claim 1, and
- the receiver system of claim 8.

15. A method for supplying AC current to an electrical vehicle (199) using a charging station (202) according to claim 1, the method comprises:
- connecting a charging socket (131) with a charging plug (132) of the charging cable (103),
- monitoring at least one charging related signal (281), wherein the at least one charging related signal relates to a condition for maintaining or generating a cut-off between the electric power source and the charging socket to de-energize the charging socket,
- communicating a control signal (251) out of the charging station to a second communication unit (260) of a receiver system (270), wherein the control signal is based on the monitored charging related signal.
